(19) Europäisches Patentamt
European Patent Office
Office européen des brevets

(11) Veröffentlichungsnummer: **0 255 641 B1**

# (12) EUROPÄISCHE PATENTSCHRIFT

(45) Veröffentlichungstag der Patentschrift: **23.10.91**

(51) Int. Cl.$^5$: **C08L 69/00**, C08L 33/12, //(C08L69/00,33:12),(C08L33/12, 69:00)

(21) Anmeldenummer: **87110464.2**

(22) Anmeldetag: **20.07.87**

## (54) Thermoplastische Formmassen aus Polycarbonat und Terpolymerisaten.

(30) Priorität: **02.08.86 DE 3626258**

(43) Veröffentlichungstag der Anmeldung:
**10.02.88 Patentblatt 88/06**

(45) Bekanntmachung des Hinweises auf die Patenterteilung:
**23.10.91 Patentblatt 91/43**

(84) Benannte Vertragsstaaten:
**DE FR GB IT NL**

(56) Entgegenhaltungen:
**EP-A- 0 199 193**

**PATENT ABSTRACTS OF JAPAN, Band 7, Nr. 28 (C-149)[1173], 4. Februar 1983; & JP-A-57 185 340 (MITSUBISHI RAYON K.K.) 15-11-1982**

(73) Patentinhaber: **BAYER AG**
**W-5090 Leverkusen 1 Bayerwerk(DE)**

(72) Erfinder: **Kress, Hans-Jürgen, Dr. Mobay Corporation**
**Plastics and Rubber Division Building 8**
**Mobay Road Pittsburgh, PA 15205(US)**
Erfinder: **Lindner, Christian, Dr.**
**Riehler Strasse 200**
**W-5000 Köln 60(DE)**
Erfinder: **Morbitzer, Leo, Dr.**
**Runge Strasse 50**
**W-5000 Köln 80(DE)**
Erfinder: **Peters, Horst, Dr.**
**Winterberg 25**
**W-5090 Leverkusen 3(DE)**
Erfinder: **Schoeps, Jochen, Dr.**
**Windmühlenstrasse 126**
**W-4150 Krefeld 1(DE)**
Erfinder: **Leitz, Edgar, Dr.**
**Goethestrasse 63**
**W-4047 Dormagen 1(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Gegenstand der vorliegenden Erfindung sind thermoplastische Formmassen, bestehend aus:

A.

1 - 99 Gew.-Teilen, vorzugsweise

5 - 95 Gew.-Teilen eines aromatischen thermoplatischen Polycarbonates oder mehrerer aromatischer thermoplasticher Polycarbonate und

B.

1 - 99 Gew.-Teilen, vorzugsweise

5 - 95 Gew.-Teilen eines thermoplastischen Copolymerisats aus 30 bis 40 Gew.-Teile, vorzugsweise 34,5 Gew.-Teile, α-Methylstyrol, 50 bis 60 Gew.-Teile, vorzugsweise 55,5 Gew.-Teile. Methylmethacrylat und 5 bis 15 Gew.-Teile, vorzugsweise 10 Gew.-Teile, Acrylnitril.

sowie gegebenenfalls Stabilisatoren, Pigmenten, Fließmitteln, Flammschutzmitteln, Entformungsmitteln oder Antistatika in den üblichen Mengen.

Die erfindungsgemäßen Formmassen aus (A) und (B) haben nur ein einziges Thermoplast-Verlustmodulmaximum bzw. zeigen nur eine einzige Glasübergangstemperatur, was einer gegenüber dem Stand der Technik, bezüglich Polycarbonat/Copolymerisat-Mischungen, verbesserten Mischbarkeit entspricht.

Bei der Herstellung von Polymerblends ist Unverträglichkeit, bedingt durch ungenügende Mischbarkeit der Komponenten, weit verbreitet.

Der Erfindung liegt die Erkenntnis zugrunde, daß ein spezielles Copolymerisat aus α-Methylstyrol, Acrylnitril und Methylmethacrylat, wobei die Mengen der Komponenten nur sehr gering variiert werden können, verbesserte Mischbarkeit mit Polycarbonat besitzt und somit "verträgliche" Polycarbonate/Vinylpolymerisat-Mischungen ergibt.

Aus DE-AS 2 259 565 sind Polycarbonat/Pfropfpolymerisat/Copolymerisat-Mischungen bekannt, deren Pfropfpolymerisate durch Polymerisation von Styrol, Methylmethacrylat in Kombination mit Acrylnitril und/oder Methylmethacrylat aus einen Kautschuk und deren Copolymerisate aus 95 - 50 % Styrol, α-Methylstyrol, Methacrylat oder Mischungen daraus und 5 - 50 % Acrylnitril, Methylmethacrylat oder Mischungen daraus hergestellt worden sind. Diese Zusammensetzungen besitzen eine verbesserte Fließnahtfestigkeit.

DE-OS 1 810 993 beschreibt Polycarbonat/Pfropfpolymerisat/Copolymerisat-Mischungen der gleichen Art, wobei die eingesetzte vinylaromatische Verbindung vorwiegend α-Methylstyrol ist. Solche Mischungen besitzen hohe Wärmeformbeständigkeit, jedoch eine schlechtere Kerbschlagzähigkeit als analoge Mischungen auf Styrolbasis.

Mischungen von Polycarbonat mit Pfropfpolymerisaten aus Mischungen von Styrol, Vinyltoluol, Methylmethacrylat, Acrylnitril, Methylacrylat, Hydroxyethylacrylat oder Ethylmethacrylat auf einen Dienkautschuk sind z.B. in der japanischen Patentanmeldung 56/131-657 beschrieben.

Die japanische Patentanmeldung 57-185340 betrifft eine Masse aus einem Methylmethacrylat-Methylstyrol-Acrylnitril-Terpolymer, einem Polycarbonat und einem schlagfesten Harz, das einen vernetzten Acrylesterpolymer-Kautschuk enthält. Das in diesem Produkt enthaltene Terpolymer hat eine andere Zusammensetzung als das hier vorliegende.

Erfindungsgemäß geeignete, thermoplastiche, aromatische Polycarbonate (A) sind solche auf Basis der Diphenole der Formel (I)

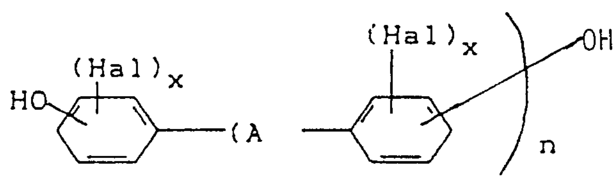

(I)

worin A eine Einfachbindung, einen $C_1$-$C_5$-Alkylen-Rest, einen $C_2$-$C_5$-Alkyliden-Rest, einen $C_5$-$C_6$-Cycloalkyliden-Rest, -S-oder -$SO_2$-; Hal = Chlor oder Brom, x = 0, 1 oder 2 und n = 1 oder 0 sind und gegebenenfalls zusätzlich der Formel (1a)

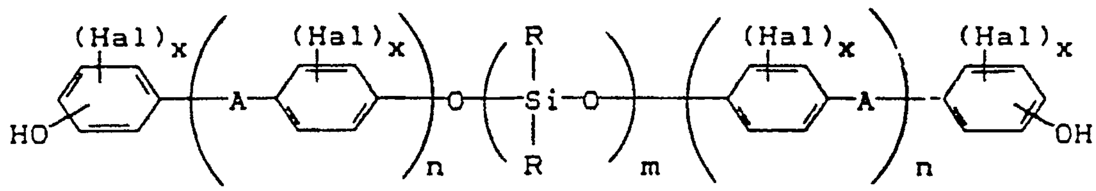

(Ia)

worin A; Hal; x und n die für Formel (I) genannte Bedeutung haben und R gleiche oder verschiedene lineare $C_1$-$C_{20}$-Alkyl-, verzweigte $C_3$-$C_{20}$-Alkyl- oder $C_6$-$C_{20}$-Aryl-Reste, vorzugsweise -$CH_3$ bedeutet und m eine ganze Zahl von 5 bis 100, vorzugsweise von 20 bis 80 ist.

Erfindungsgemäß geeignete Polycarbonate (A) sind Homopolycarbonate von Diphenolen der Formel (I) und Copolycarbonate von Diphenolen der Formel (I) und Diphenolen der Formel (Ia) in einer Gewichtsmenge von 1 bis 20 Gew.-%, vorzugsweise 1,5 bis 15 gew.-% und insbesondere 2 bis 10 Gew.-%, bezogen auf das Gesamtgewicht der eingesetzten Diphenole. Geeignet sind auch Mischungen aus einem Copolycarbonat auf Basis von Diphenolen (Ia) und (I) und einem anderen siloxanfreien thermoplastischen Polycarbonat, wobei die Menge an einkondensierten Diphenolen (Ia) in der Polycarbonatmischung 1 bis 20 Gew.-% ist.

Die Diphenole der Formel (I) sind bekannt oder nach bekannten Verfahren herstellbar; Polydiorganosiloxane mit Hydroxy-aryloxy-Endgruppen gemäß Formel (Ia) sind ebenfalls bekannt (vgl. US-PS 3 419 634) oder nach bekannten Verfahren herstellbar.

Die Herstellung erfindungsgemäß geeigneter Polycarbonate (A) ist bekannt. Man kann die Diphenole beispielsweise mit Phosgen nach dem Phasengrenzflächenverfahren oder in homogener Phase (dem sogenannten Pyridinverfahren) umsetzen, wobei das Molekulargewicht durch eine entsprechende Menge an Kettenabbrechern eingestellt wird (vgl. DE-OS 3 334 782).

Geeignete Kettenabbrecher sind beispielsweise Phenol, p-Chlorphenol, p-tert.-Butylphenol und 2,4,6-Tribromphenol, sowie langkettige Alkylphenole wie 4-(1,3-Tetramethyl-butyl)-phenol (gemäß DE-OS 2 842 005), Monoalkylphenole und Dialkylphenole mit insgesamt 8 bis 20 C-Atomen in den Alkylsubstituenten (gemäß deutscher Patentanmeldung P-350647.2), wie p-Nonylphenol, 3,5-di-tert.-Butylphenol, p-tert.-Octylphenol, p-Dodecylphenol, 2-(3,5-Dimethyl-heptyl)-phenol und 4-(3,5-Dimethylheptyl)-phenol.

Die erfindungsgemäß geeigneten Polycarbonate (A) haben mittlere Gewichtsmittelmolekulargewichte ($\overline{M}w$, gemessen durch Ultrazentrifugation oder Streulichtmessung) von 10 000 bis 200 000, vorzugsweise von 20 000 bis 80 000.

Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Besonders geeignete Diphenole der Formel (Ia) sind solche, in denen R Methyl, Ethyl, Propyl, n-Butyl, tert.-Butyl und Phenyl ist.

Bevorzugte Diphenole der Formel (Ia) entsprechen der Formel (Ib)

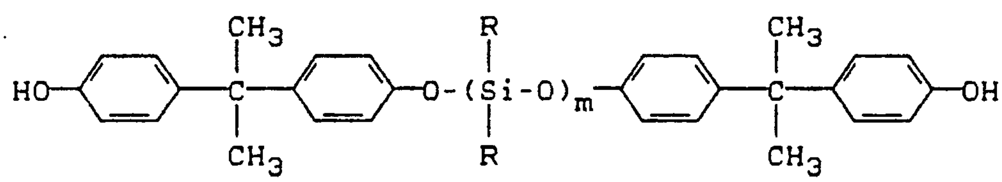

(Ib)

worin die beiden Reste R gleich sind und die vorstehend genannte Bedeutung haben, bevorzugt für Methyl etc. und Phenyl stehen und m eine ganze Zahl von 5 bis 100, vorzugsweise von 20 bis 80, ist.

Die Diphenole der Formel (Ia) können beispielsweise aus den entsprechenden Bis-chlorverbindungen der Formel (II)

$$Cl-(\overset{R}{\underset{R}{Si}}-O)_m-\overset{R}{\underset{R}{Si}}-Cl \qquad (II)$$

worin R und m die bereits angegebene Bedeutung haben, und den Diphenolen der Formel (I) gemäß US-PS 3 419 634, Spalte 3, in Kombination mit US-PS 3 182 662 hergestellt werden.

Die erfindungsgemäß geeigneten Polycarbonate (A) können verzweigt sein, und zwar vorzugsweise durch den Einbau von 0,05 bis 2,0 Mol-%, bezogen auf die Summe der eingesetzten Diphenole, an drei oder mehr als dreifunktionellen Verbindungen, beispielsweise solchen mit drei oder mehr als drei phenolischen OH-Gruppen.

Bevorzugte Polycarbonate sind neben dem Bisphenol A-Homopolycarbonat die Copolycarbonate von Bisphenol A mit bis zu 30 Gew.-%, bezogen auf die Gewichtssumme an Diphenolen, an 2,2,-Bis-(3,5-dibrom-4-hydroxyphenyl)-propan oder die Copolycarbonate der Diphenole der Formel (I) mit 1 bis 20 Gew.-% an Diphenolen der Formel (Ia), vorzugsweise der Formel (Ib), bezogen auf die Gewichtssumme der Diphenole (I) und (Ia) bzw. (I) und (Ib).

Die Copolymerisate (B) sind thermoplastische, harzartige Polymerisate. Sie sind bekannt und lassen sich durch radikalische Polymerisation, insbesondere durch Emulsions-, Suspensions-, Lösungs- oder Massepolymerisation herstellen. Ihr Molekulargewicht $\overline{M}w$ (Gewichtsmittel, ermittelt durch Lichtstreuung oder Sedimentation) ist 15 000 bis 200 000, insbesondere kleiner 100 000.

Besonders bevorzugte Copolymerisate (B) sind solche aus 34,5 Gew.-Teile α-Methylstyrol, 55,5 Gew.-Teile Methylmethacrylat und 10 Gew.-Teile Acrylnitril.

Die erfindungsgemäßen Formmassen können weitere für Polycarbonat/Pfropfpolymerisat/Copolymerisat-Formmassen bekannte Zusätze, wie Stabilisatoren, Pigmente, Fließmittel, Flammschutzmittel, Entformungsmittel und/oder Antistatika, in den üblichen Mengen enthalten.

Gegenstand der vorliegenden Erfindung ist auch ein Verfahren zur Herstellung von thermoplatischen Formmassen aus den Komponenten A, B und gegebenenfalls bekannten Zusätzen wie Stabilisatoren, Pigmente, Fließmittel, Flammschutzmittel, Entformungsmittel und Antistatika, das dadurch gekennzeichnet ist, daß man die Komponenten A, B und gegebenenfalls Zusätze vermischt und dann bei Temperaturen von 200°C bis 330°C in dafür üblichen Vorrichtungen, z.B. Innenknetern, Extrudern, Doppelwellenschnecken, schemlzcompoundiert oder schmelzextrudiert.

Die Komponenten können sukzessive oder simultan gemischt werden, bei etwa 20°C (Raumtemperatur) oder auch bei höherer Temperatur.

Die Formmassen der vorliegenden Erfindung können zur Herstellung von Formkörpern jeder Art, insbesondere durch Spritzguß, verwendet werden. Beispiele für herstellbare Formkörper sind:
Machinengehäuse (z.B. für Haushaltsgeräte, wie Saftpressen, Kaffeemaschinen, Mixer), Abdeckplatten für Bauten, Kraftfahrzeug-Teile und Bauteile für Elektrogeräte (wegen ihrer guten elektrischen Eigenschaften).

Formkörper können auch durch Tiefziehen aus Platten und Folien hergestellt werden.

Der Siloxangehalt im Polydiorganosiloxan-Polycarbonat-Blockcopolymeren, d.h. der Anteil der Dimethylsiloxy-Einheiten in Gew.-%, bezogen auf das Gesamtgewicht des Blockcopolymeren, kann gravimetrisch und durch Kernresonanzspektrometrie ermittelt werden. Als mittlere Siloxanblocklänge wird der durch Bestimmung der Endgruppe am Siloxan-Prepolymer (Formel Ia) ermittelte Polymerisationsgradd $\overline{Pn}$ angegeben.

<u>Beispiele</u>

Eingesetzte Polykondensate und Polymerisate:

A 1)
Polycarbonat aus 2,2-Bis-(4-hydroxyphenyl)-propan (Bisphenol A) mit einer relativen Lösungsviskosität von 1,26 - 1,28, gemessen in Methylenchlorid bei 25°C und einer Konzentration vin 0,5 Gew.-%.
A 2)

Polycarbonat aus 2,2-Bis-(4-hydroxyphenyl)-propan (Bisphenol A) mit einer relativen Lösungsviskosität von 1,30 - 1,32, gemessen in Methylenchlorid bei 25° C und einer Konzentration von 0,5 %.

A 3)

Copolycarbonat auf Basis von Bisphenol A mit 10 Gew.-% Tetrabrombisphenol A und einer relativen Lösungsviskosität von 1,284, gemessen in $CH_2Cl_2$ bei 25° C und einer Konzentration von 0,5 g/l; Gehalt an Brom: ca. 5 Gew.-%.

A 4)

Copolycarbonat aus Basis von Bisphenol A und 5 Gew.-% Polydimethylsiloxan der Blocklänge ($\overline{P}_n$) 40, mit einer relativen Lösungsviskosität von 1,31, gemessen in $CH_2Cl_2$ bei 25° C und einer Konzentration von 0,5 g/100 ml.

B 1)

Ein thermoplastisches Copolymerisat aus 34,5 Gew.-% α-Methylstyrol, 55,5 Gew.-% Methylmethacrylat und 10 Gew.-% Acrylnitril, mit einem L-Wert = 58, hergestellt durch Emulsionspolymerisation.

B 2)

Copolymerisat gemäß B 1 mit einem L-Wert = 40.

B 3)

Copolymerisat gemäß B 1 mit einem L-Wert = 42.

B 4)

Copolymerisat gemäß B 1 mit einem L-Wert = 41.

B 5)

Copolymerisat gemäß B 1 mit einem L-Wert = 48.

B 6)

Copolymerisat gemäß B 1 mit einem L-Wert = 49.

B 7)

Styrol/Acrylnitril-Copolymerisat mit einem Styrol/Acrylnitril-Verhältnis von 72:28 und einem L-Wert = 60, hergestellt durch Massepolymerisation.

B 8)

Methylmethacrylat/Acrylnitril-Copolymerisat mit einem Methylmethacrylat/Acrylnitril-Verhältnis von 70:30 und einem L-Wert = 77, hergestellt durch Emulsionspolymerisation.

B 9)

Ein Copolymerisat aus 50 Gew.-% α-Methylstyrol, 35,5 Gew.-% Methylmethacrylat, 14,5 Gew.-% Acrylnitril und einem L-Wert = 43, hergestellt durch Emulsionspolymerisation.

B 10)

Ein Copolymerisat aus 24,5 Gew.-% α-Methylstyrol, 64 Gew.-% Methylmethacrylat, 11,5 Gew.-% Acrylnitril und einem L-Wert = 36, hergestellt durch Emulsionspolymerisation.

B 11)

Ein Copolymerisat aus 14,5 Gew.-% α-Methylstyrol, 72,5 Gew.-% Methylmethacrylat, 13 Gew.-% Acrylnitril und einem L-Wert = 36, hergestellt durch Emulsionspolymerisation.

Der L-Wert ist definiert als spezifische Viskosität einer Polymerlösung in Dimethylformamid (gemessen bei 20° C) bei der Konzentration 5 g/l, dividiert durch diese Konzentration.

Die Glastemperatur wurde an Gießfolien bestimmt. Diese wurden durch Lösen der Komponenten in dem gewünschten Mischungsverhältnis in Methylenchlorid, Vergießen der Lösung, Abdampfen des Lösungsmittels bei Raumtemperatur und Nachtrocknen bei 50 - 70° C bei leichtem Vakuum hergestellt.

Zur Bestimmung der Schubmodulkurve wurden Spritzgußteile, hergestellt bei 260° C, eingesetzt (ASTM-Stab 1/8").

Das beim Spritzguß eingesetzte Material wurde auf einem 1,3-l-Innenkneter bei einer Temperatur von 200 - 220° C compoundiert.

Die Glastemperatur wurde mittels eines Differentialkalorimeters, DSC-2 (Perkin-Elmer) bestimmt. Jede Probe wurde hierbei unter Stickstoff als Schutzgas zweimal von +10° C bis 200° C mit einer Heizrate von 20 K/min aufgeheizt. Nach der ersten Aufheizung wurde die Probe im Kalorimeter mit 320 K/min auf 10° C abgekühlt. Gemessen wurde bei der zweiten Aufheizung.

Zur Bestimmung des Glaspunktes mittels Schubmodulmessung wurde ein Rheometric Dynamie Spektrometer (Meßfrequenz 1 Hz), RDS 7700 der Firma Rheometrie verwendet. Gemessen wurde an den Spritzgußteilen im Ausgangszustand.

In den folgenden Tabellen sind die untersuchten Polycarbonat/Copolymerisat-Mischungen sowie die zugehörigen Meßergebnisse aufgeführt:

Tabelle 1

| A 1 (Gew.-Tl.) | B 1 | B 2 | B 3 | Glaspunkt (DSC) (°C) |
|---|---|---|---|---|
| 100 | - | | | 146 |
| 90 | 10 | | | 142 |
| 70 | 30 | | | 124 |
| 50 | 50 | | | 122 |
| 30 | 70 | | | 120 |
| 10 | 90 | | | 114 |
| 0 | 100 | | | 112 |
| 90 | | 10 | | 142 |
| 50 | | 50 | | 123 |
| 30 | | 70 | | 118 |
| 10 | | 90 | | 115 |
| 20 | | | 80 | 117 |
| 30 | | | 70 | 120 |
| 40 | | | 60 | 124 |
| 70 | | | 30 | 130 |

Tabelle 2

| A 1 (Gew.-Tl.) | A 2 | A 3 | A 4 | B 4 | B 5 | B 6 | Glaspunkt (DSC) (°C) | (Schubmodul) |
|---|---|---|---|---|---|---|---|---|
| 30 | | | | 70 | | | 126 | |
| | 30 | | | 70 | | | 126 | |
| | | 30 | | 70 | | | 126 | |
| 30 | | | | | 70 | | 123 | |
| | | | 30 | | 70 | | 121 | |
| | | | 20 | | | 80 | | 121 |
| | | | 40 | | | 60 | | 124 |

Tabelle 3

| A 1 (Gew.-Tl.) | B 7 | B 8 | B 9 | B 10 | B 11 | Glaspunkt (DSC) (°C) |
|---|---|---|---|---|---|---|
| 10 | 90 | | | | | 106/138 |
| 30 | 70 | | | | | 107/136 |
| 50 | 50 | | | | | 109/140 |
| 70 | 30 | | | | | 107/138 |
| 90 | 10 | | | | | 112/145 |
| 30 | | 70 | | | | 90/129 |
| 70 | | 30 | | | | 91/139 |
| 0 | | 100 | | | | 87/- |
| 30 | | | 70 | | | 112/139 |
| - | | | 100 | | | 116/- |
| 30 | | | | 70 | | 112/130 |
| 70 | | | | 30 | | 117/138 |
| 0 | | | | 100 | | 105/- |
| 30 | | | | | 70 | 104/128 |
| 70 | | | | | 30 | 108/136 |
| - | | | | | 100 | 99/- |

Tabelle 1 zeigt, daß die Mischung der beiden Komponenten, Polycarbonate und das erfindungsgemäß zu verwendende Copolymerisat nur einen einzigen Glaspunkt besitzen.

Aus Tabelle 2 geht hervor, daß die bessere Mischbarkeit unabhängig vom eingesetzten Polycarbonattyp sowie der Art der Mischungsherstellung ist.

In Tabelle 3 sind Glaspunkte für Mischungen aufgelistet, die als Harzkomponente ein Copolymerisat mit abweichender Zusammensetzung beinhalten. Es resultieren jeweils zwei Glaspunkte.

**Patentansprüche**

1. Thermoplastische Formmassen, bestehend aus:

   A.

   1 - 99 Gew.-Teilen eines aromatischen thermoplastischen Polycarbonates oder mehrerer aromatischer thermoplastischer Polycarbonate und

B.
1 - 99 Gew.-Teilen eines thermoplastischen Copolymerisates aus 30 - 40 Gew.-Teile α-Methylstyrol, 50 - 60 Gew.-Teile Methylmethacrylat und 5 bis 15 Gew.-Teile Acrylnitril.

sowie gegebenenfalls Stabilisatoren, pigmenten, Fließmitteln, Flammschutzmitteln, Entformungsmitteln oder Antistatika in den üblichen Mengen.

2. Thermoplastische Formmassen gemäß Anspruch 1, dadurch gekennzeichnet, daß (B) aus 34,5 Gew.-Teile α-Methylstyrol-Einheiten, 55,5 Gew.-Teile Methyl-methacrylat-Einheiten und 10 Gew.-Teile Acrylnitril-Einheiten aufgebaut ist.

3. Formmassen gemäß Anspruch 1, dadurch gekennzeichnet, daß das aromatische, thermoplastische Polycarbonat ein Copolycarbonat ist, das 1 bis 20 Gew.-%, bezogen auf Gesamtgewicht der eingesetzten Diphenole, Diphenole der Formel (Ia) eingebaut enthält,

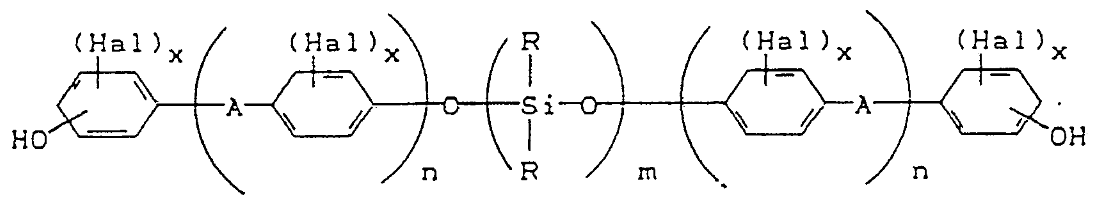

(Ia)

worin A eine Einfachbindung, einen $C_1$-$C_5$-Alkylenrest, einen $C_2$-$C_5$-Alkylidenrest, einen $C_5$-$C_6$-Cycloalkylidenrest, -S-oder -$SO_2$-; Hal = Chlor oder Brom, x = 0, 1 oder 2, n = 1 oder 0 bedeuten und R gleich oder verschieden ist und lineare $C_1$-$C_{20}$-Alkyl-Reste, verzweigte $C_3$-$C_{20}$-Alkyl-Reste oder $C_6$-$C_{20}$-Aryl-Rest bedeutet und m eine ganze Zahl von 5 bis 100 ist.

4. Formmassen gemäß Anspruch 1, dadurch gekennzeichnet, daß (A) eine Mischung aus einem Copolycarbonat gemäß Anspruch 3 und einem anderen siloxanfreien thermoplastischen Polycarbonat ist, wobei der Gesamtgehalt an Diphenolen (Ia) in der Polycarbonatmischung, bezogen auf die Gewichtssumme der eingesetzten Diphenole, 1 bis 20 Gew.-% ist.

5. Verfahren zur Herstellung der Formmassen gemäß Anspruch 1, dadurch gekennzeichnet, daß man (A) und (B) in bekannter Weise vermischt und danach bei Temperaturen von 200°C bis 330°C in gebräuchlichen Aggregaten schmelzcompoundiert oder schmelzextrudiert.

**Claims**

1. Thermoplastic moulding compounds consisting of:
A. 1 to 99 parts by weight of an aromatic thermoplastic polycarbonate or several aromatic thermoplastic polycarbonates and
B. 1 to 99 parts by weight of a thermoplastic copolymer of 30 to 40 parts by weight α-methyl styrene, 50 to 60 parts by weight methyl methacrylate and 5 to 15 parts by weight acrylonitrile

and, optionally, stabilizers, pigments, flow aids, flame-proofing agents, mould release agents or antistatic agents in the usual quantities.

2. Thermoplastic molding compounds as claimed in claim 1, characterized in that (B) consists of 34.5 parts by weight α-methyl styrene units, 55.5 parts by weight methyl methacrylate units and 10 parts by weight acrylonitrile units.

3. Moulding compounds as claimed in claim 1, characterized in that the aromatic thermoplastic polycarbonate is a copolycarbonate containing 1 to 20% by weight, based on the total weight of the diphenols used, of incorporated diphenols corresponding to formula (Ia)

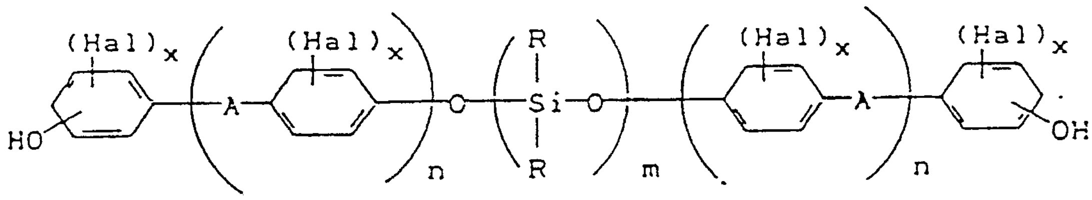

in which A is a single bond, a $C_{1-5}$ alkylene radical, a $C_{2-5}$ alkylidene radical, a $C_{5-6}$ cycloalkylidene radical, -S- or $-SO_2-$; Hal = chlorine or bromine, x = 0, 1 or 2 and n = 1 or 0 and the R's may be the same or different and represent linear $C_{1-20}$ alkyl radicals, branched $C_{3-20}$ alkyl radicals or $C_{6-20}$ aryl radicals and m is an integer of 5 to 100.

**4.** Molding compounds as claimed in claim 1, characterized in that (A) is a mixture of a copolycarbonate according to claim 3 and another siloxane-free thermoplastic polycarbonate, the total content of diphenols (Ia) in the polycarbonate mixture, based on the total weight of the diphenols used, being from 1 to 20% by weight.

**5.** A process for the production of the molding compounds claimed in claim 1, characterized in that (A) and (B) are mixed in known manner and the resulting mixture is subsequently melt-compounded or melt-extruded in standard units at temperatures in the range from 200 to 330 °C.

## Revendications

**1.** Matières à mouler thermoplastiques consistant en :

A. 1 à 99 parties en poids d'un polycarbonate aromatique thermoplastique ou de plusieurs polycarbonates aromatiques thermoplastiques et

B. 1 à 99 parties en poids d'un copolymère thermplastique de 30 à 40 parties en poids d'α-méthylstyrène, 50 à 60 parties en poids de méthacrylate de méthyle et 5 à 15 parties en poids d'acrylonitrile,

et le cas échéant des stabilisants, des pigments, des agents fluidifiants, des agents ignifugeants, des agents de démoulage ou des agents antistatiques aux proportions habituelles.

**2.** Matières à mouler thermoplastiques selon la revendication 1, caractérisées en ce que le copolymère B) contient 34,5 parties en poids de motifs d'α-méthylstyrène, 55,5 parties en poids de motifs de méthacrylate de méthyle et 10 parties en poids de motifs d'acrylonitrile.

**3.** Matières à mouler selon la revendication 1, caractérisées en ce que le polycarbonate aromatique thermoplastique est un copolycarbonate contenant, par rapport au poids total des diphénols mis en oeuvre, de 1 à 20 % en poids de diphénols de formule Ia

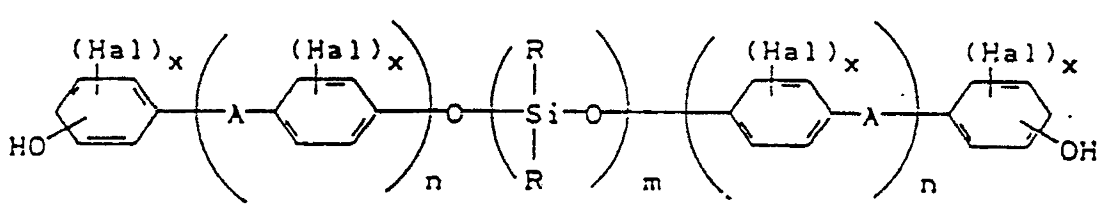

(Ia)

dans laquelle A représente une liaison simple, un groupe alkylène en $C_1$-$C_5$, alkylidène en $C_2$-$C_5$, cycloalkylidène en $C_5$-$C_6$, -S- ou $-SO_2-$, Hal représente le chlore ou le brome, x est égal à 0,1 ou 2, n est égal à 1 ou 0 et les symboles R, ayant des significations identiques ou différentes, représentent chacun un groupe alkyle linéaire en $C_1$-$C_{20}$, un groupe alkyle ramifié en $C_3$-$C_{20}$ ou un groupe aryle en $C_6$-$C_{20}$, et m est un nombre entier allant de 5 à 100.

4. Matières à mouler selon la revendication 1, caractérisées en ce que le composant A est un mélange d'un copolycarbonate selon la revendication 3 et d'un autre polycarbonate thermoplastique exempt de siloxane, la teneur totale en diphénols la du mélange de polycarbonates, par rapport à la somme des poids des diphénols mis en oeuvre étant de 1 à 20% en poids.

5. Procédé de préparation des matières à mouler selon la revendication 1, caractérisé en ce que l'on mélange A et B de manière connue puis on mélange à l'état fondu ou on extrude à l'état fondu à des températures de 200 à 330° C dans des appareillages usuels.